(19)

Europäisches Patentamt
European Patent Office
Office européen des brevets

(11) **EP 3 534 107 A1**

(12) **EUROPEAN PATENT APPLICATION**
published in accordance with Art. 153(4) EPC

(43) Date of publication:
**04.09.2019 Bulletin 2019/36**

(51) Int Cl.:
***G01B 11/14*** *(2006.01)*

(21) Application number: **17866231.8**

(86) International application number:
**PCT/JP2017/038693**

(22) Date of filing: **26.10.2017**

(87) International publication number:
**WO 2018/079649 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2016 JP 2016209460**

(71) Applicant: **Toray Industries, Inc.**
**Tokyo 103-8666 (JP)**

(72) Inventors:
- **HOSOKAWA, Naofumi**
  **Nagoya-shi**
  **Aichi 455-8502 (JP)**
- **YAMASAKI, Masaaki**
  **Nagoya-shi**
  **Aichi 455-8502 (JP)**

(74) Representative: **Hoefer & Partner Patentanwälte mbB**
**Pilgersheimer Straße 20**
**81543 München (DE)**

(54) **METHOD AND DEVICE FOR MEASURING WIDTH OF GAP IN REINFORCED FIBER LAMINATE**

(57)     An object of the present invention is to provide a simple technique for measuring a width of a gap present in a surface layer of a reinforced fiber laminate, which is applicable to a fiber placement process. As a means for solving the problem, provided is a method in which at least one of a fiber reinforced substrate of the surface layer and a fiber reinforced substrate having an exposed part due to the presence of a gap, the reinforced fiber laminate is irradiated with light in a direction vertical to an orientation direction of a continuous fiber present in a unidirectional reinforced fiber substrate of the reinforced substrate and at an acute angle with respect to a surface of the fiber reinforced substrate of the surface layer, and a sensor receives reflected light from the irradiation light, thereby calculating the width of the gap.

【Fig. 1 】

EP 3 534 107 A1

**Description**

TECHNICAL FIELD

The present invention relates to a method and device for measuring a width of a gap present in a surface layer of a reinforced fiber laminate.

BACKGROUND ART

A composite material in which a carbon fiber, an aramid fiber, a glass fiber, or the like is used as a reinforced fiber is utilized as a structural material for an aircraft, an automobile, and the like, and a material for applications covering sports products or general industry pursuits, by taking advantage of its high specific strength and specific modulus. In particular, the composite material is widely used for the purpose of saving fuel and reducing operating costs in the aircraft industry.

To produce such aircraft members, an AFP(Automatic Fiber Placement) technique is utilized. The AFP is a technique in which narrow tapes each including a reinforced fiber and resin are automatically arranged at an appropriate location and the tapes are laminated in a mold.

In order to ensure whether an appropriate amount of tapes (specifically, the reinforced fiber constituting the tapes) laminated using the AFP technique is present at an accurate location in an accurate direction, it is necessary to measure and inspect the amount of distance (i.e., a gap) between the laminated tapes.

In the related art method, laminated samples are cut out and visually inspected or inspected through image processing at offline, which takes a lot of time and labor.

On the other hand, as a method for performing an inspection online, a method of inspecting uncured fiber reinforced composite components by non-contact 3D measurement of components using a 3D digital image correlation by patterned irradiation (e.g., Patent Document 1). In the technique disclosed in Patent Document 1, a difference in thickness is calculated by non-contact 3D measurement, thereby making it possible to inspect the amount of gap.

Further, as a technique for inspecting an arrangement angle of a reinforced fiber constituting a laminate including a carbon fiber and a glass fiber, a technique of detecting an arrangement angle of a reinforced fiber from CT scan data is known (e.g., Patent Document 2). In the technique disclosed in Patent Document 2, a plurality of CT images parallel to a stacking surface is obtained using the glass fiber as a marker, and two-dimensional discrete Fourier transform processing is performed on each of the CT images, thereby making it possible to a stacking angle of unidirectional reinforced fiber substrates in the laminate from a power spectrum obtained based on the processing result.

PRIOR ART DOCUMENTS

PATENT DOCUMENTS

Patent Document 1: Japanese Patent Laid-open Publication No. 2016-75662
Patent Document 2: Japanese Patent Laid-open Publication No. 2008-122178

SUMMARY OF THE INVENTION

PROBLEMS TO BE SOLVED BY THE INVENTION

However, the inspection method disclosed in Patent Document 1 requires introduction of a high-performance non-contact 3D measuring device, which causes such problems that a large initial cost is required and it takes a lot of time and labor for image capturing and corrections.

In addition, the inspection technique disclosed in Patent Document 2 has such problems that the size of an object to be measured is limited and the technique cannot be applied to a laminate including no marker such as a glass fiber.

Accordingly, an object of the present invention is to provide a technique and device for measuring a width of a gap present in a surface layer of a reinforced fiber laminate, which can be applied to a process for automatically arranging tapes, by using a simple technique.

SOLUTION TO THE PROBLEMS

To achieve the above-described object, the present invention has the following configuration.

(1) A method for measuring a width of a gap present in a surface layer of a reinforced fiber laminate, in which the reinforced fiber laminate has a structure in which a plurality of reinforced fiber substrates is stacked, a fiber reinforced substrate of the surface layer forms the gap due to presence of an elongated groove-like notch in at least a part of the fiber reinforced substrate of the surface layer, a part of a fiber reinforced substrate different from the reinforced fiber substrate of the surface layer is exposed at least one of the fiber reinforced substrate of the surface layer and the fiber reinforced substrate having an exposed part is a unidirectional reinforced fiber substrate, an orientation form of a fiber included in the fiber reinforced substrate of the surface layer is different from an orientation form of a fiber included in the fiber reinforced substrate that is present in the reinforced fiber laminate and has an exposed part, and an irradiation source is disposed in a direction vertical to an orientation direction of a continuous fiber present in the unidirectional reinforced fiber substrate among the reinforced substrates and at an acute angle with respect to a surface of the fiber reinforced substrate of the surface layer, and irradiates the reinforced fiber laminate with light, reflected light from the irradiation light being received by a sensor, the width of the gap being calculated from an intensity and width of the reflected light.

As a preferred embodiment of the invention, the following measurement method is disclosed.

(2) A method for measuring a width of a gap present in a surface layer of a reinforced fiber laminate, in which a fiber reinforced substrate of a unidirectional reinforced fiber substrate is one of a prepreg and a non-crimp fabric.

(3) The method for measuring the width of the gap present in the surface layer of the reinforced fiber laminate according to any one of the above-described aspects, in which an irradiation angle of the irradiation light is 5 to 60° with respect to a surface of the surface layer base material.

(4) The method for measuring the width of the gap present in the reinforced fiber laminate according to any one of the above-described aspects, in which two irradiation sources are present and the irradiation sources are present on opposite sides at an angle of 180° with respect to a central axis of light entering the sensor.

(5) The method for measuring the width of the gap present in the reinforced fiber laminate according to any one of the above-described aspects, in which the irradiation source includes one of a parallel light irradiation mechanism and a lateral light diffusion preventing mechanism.

(6) The method for measuring the width of the gap present in the reinforced fiber laminate according to any one of the above-described aspects, in which a result of measuring the width of the gap is reflected in an arrangement device for arranging the reinforced fiber substrate to control an arrangement of the reinforced fiber substrate.

To solve the above-described problems, the present invention provides a device that measures a width of a gap present in a surface layer of a reinforced fiber laminate.

(7) A device for measuring a width of a gap present in a surface layer of a reinforced fiber laminate, in which the reinforced fiber laminate has a structure in which a plurality of reinforced fiber substrates is laminated, a fiber reinforced substrate of the surface layer forms the gap due to presence of an elongated groove-like notch present in at least a part of the fiber reinforced substrate of the surface layer, and a part of a fiber reinforced substrate different from the reinforced fiber substrate of the surface layer is exposed, at least one of the fiber reinforced substrate of the surface layer and the fiber reinforced substrate having an exposed part is a unidirectional reinforced fiber substrate, an orientation form of a fiber included in the fiber reinforced substrate of the surface layer is different from an orientation form of a fiber included in the fiber reinforced substrate that is present in the reinforced fiber laminate and has an exposed part, and the device comprises at least an irradiation source that irradiates the reinforced fiber laminate with irradiation light in a direction vertical to an orientation direction of a continuous fiber present in the unidirectional reinforced fiber substrate of the fiber reinforced substrate and at an acute angle with respect to a surface of the fiber reinforced substrate of the surface layer, and a sensor that receives reflected light from the irradiation light.

The following measuring device is disclosed as a preferred embodiment of the invention.

(8) The device for measuring the width of the gap present in the surface layer of the reinforced fiber laminate further including a calculating means for calculating the width of the gap from an intensity distribution of the reflected light output from the sensor.

(9) The device for measuring the width of the gap present in the surface layer of the reinforced fiber laminate according to any one of above-described aspects, in which two irradiation sources are used and the irradiation sources are present on opposite sides at an angle of 180° with respect to a central axis of light entering the sensor.

(10) The device for measuring the width of the gap present in the surface layer of the reinforced fiber laminate according to any one of the above-described aspects, in which the irradiation source includes at least one of a parallel light irradiation mechanism and a lateral light diffusion preventing mechanism.

(11) The device for measuring the width of the gap present in the surface layer of the reinforced fiber laminate according to any one of the above-described aspects, in which a result of measuring the gap is reflected in an arrangement device for arranging the reinforced fiber substrate to control an arrangement of the reinforced fiber substrate.

Further, the following invention is provided.

(12) A molded body obtained by a method for measuring a width of a gap according to any one of the above-described aspects, in which the molded body is obtained by molding the reinforced fiber laminate after the width of the gap present in the reinforced fiber laminate is measured.

Hereinafter, the reinforced fiber substrate of the surface layer that forms the gap is also referred to as a "surface layer base material", and the reinforced fiber substrate exposed due to the presence of the gap is also referred to as an "exposed base material". A portion where the exposed base material is exposed due to the presence of the gap is also referred to as an "exposed portion". In addition, the device for measuring the width of the gap present in the surface layer of the reinforced fiber laminate is also referred to simply as a "gap measuring device".

Further, a three-dimensional Cartesian coordinate system is often used in the description of the present invention. However, assume that a surface formed by the reinforced substrate of the surface layer is present on an xy plane.

EFFECTS OF THE INVENTION

According to the present invention, it is possible to measure a width of a gap present in a reinforced fiber laminate by a simple method.

BRIEF DESCRIPTION OF THE DRAWINGS

Fig. 1 is a schematic perspective view illustrating an example of a reinforced fiber laminate that can be used for the present invention.

Fig. 2 is a schematic diagram illustrating directions of irradiation light on reinforced fiber and reflection of light from the reinforced fiber.

Fig. 3 is a conceptual diagram illustrating a concept of a gap width calculation method.

Fig. 4(a) is a schematic top view illustrating an example of a device for measuring the gap, Fig. 4(b) is a schematic front view thereof, and Fig. 4(c) is a schematic perspective view thereof.

Fig. 5(a) is a schematic top view illustrating an example of a gap measuring device associated with a reinforced fiber substrate automatic arrangement device according to the present invention, Fig. 5(b) is a schematic front view thereof, and Fig. 5(c) is a schematic perspective view thereof.

Fig. 6 is a schematic diagram illustrating an example of the gap measuring device according to the present invention.

Fig. 7 is a schematic diagram illustrating an example of a light source of an irradiation source of the gap measuring device according to the present invention.

EMBODIMENTS OF THE INVENTION

Preferred embodiments of the present invention will be described below with reference to the drawings. However, the following embodiments are merely examples of preferred embodiments of the present invention, and the present invention is not limited by these embodiments.

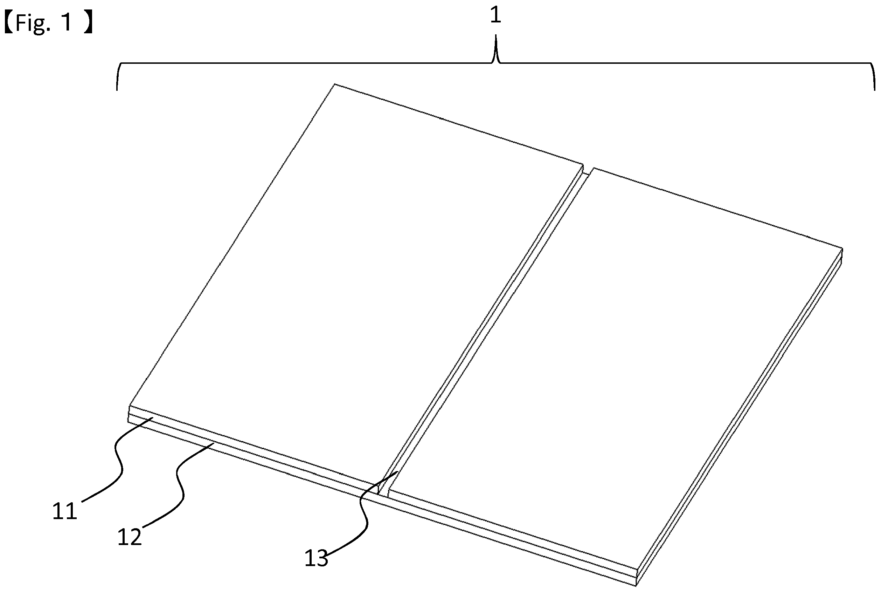

Fig. 1 illustrates a schematic perspective view of an example of a reinforced fiber laminate to be measured according to the present invention. A reinforced fiber laminate 1 illustrated in Fig. 1 has a structure in which two reinforced fiber substrates are laminated, and has a two-layer structure including a surface layer base material 11, which is a fiber reinforced substrate of a surface layer, and an exposed base material 12 which is different from the surface layer base material 11 and disposed on an opposite side, i.e., a back side thereof. A gap is present at a part of the surface layer base material 11. An elongated groove-like notch is included in the gap and a part of the exposed base material 12 is exposed from the gap. Due to the presence of the above-described gap, the exposed base material 12 includes an exposed portion 13.

Although not illustrated, when the reinforced fiber laminate has a structure in which three or more reinforced fiber substrates are laminated, an exposed base material that allows the exposed portion to be exposed is disposed in the surface layer base material arranged on the surface layer, and the fiber reinforced substrate is further disposed.

Among these, at least one of the surface layer base material and the exposed base material is required to be formed of a unidirectional reinforced fiber substrate, and a fiber orientation of the surface layer base material 11 is required to be different from a fiber orientation of the exposed base material.

As the reinforced fiber, for example, a carbon fiber, a glass fiber, an aramid fiber, or a Kevler fiber is preferably used. The form of the reinforced fiber substrate is not particularly limited, as long as a unidirectional reinforced fiber substrate is used for at least one of the above-described surface layer base material and exposed base material. For example, woven cloth, knit, non-woven fabric, unidirectional reinforced fiber substrate, and non-crimp fabric can be illustrated. These base materials can be used in the form in which resin is impregnated and made into a prepreg.

The unidirectional reinforced fiber substrate refers to a base material in which continuous reinforced fibers are aligned in one direction, and may be in the shape of a prepreg impregnated with matrix resin composition, or may be a dried form in which the shape of a woof or binder. As the fiber length of the continuous reinforced fiber, 95% by mass or more of the entire fiber preferably includes a fiber with a length of 100 mm or more.

The orientation form of the fiber refers to the direction of the fiber included in the base material and the existence ratio of the fiber having the direction. For example, in the case of a random mat of short fibers, the direction of each fiber is random. In the case of the orthogonal woven cloth fiber base material, when the number of fibers of warps constituting the woven cloth is the same as the number of fibers of wefts constituting the woven cloth, the fibers are arranged in two directions, the existence ratio in the warp direction is 50%, and the existence ratio in the weft direction is 50%.

The difference between the orientation form of the surface layer base material and the exposed base material means the difference between the direction of fibers included in the surface layer base material and the exposed base material and the existence ratio of the direction.

When one of the surface layer base material and the exposed base material is a unidirectional fiber base material, and when the other one of the base material is, for example, a reinforced substrate as described below, the base materials have different orientation forms.

i) The reinforced fiber is a woven cloth, a knit, or a random mat.
ii) Both are unidirectional fiber base materials, but the directions of fibers included in the base materials are different.

The width of the exposed portion corresponds to the gap to be measured using a measurement method according to the present invention.

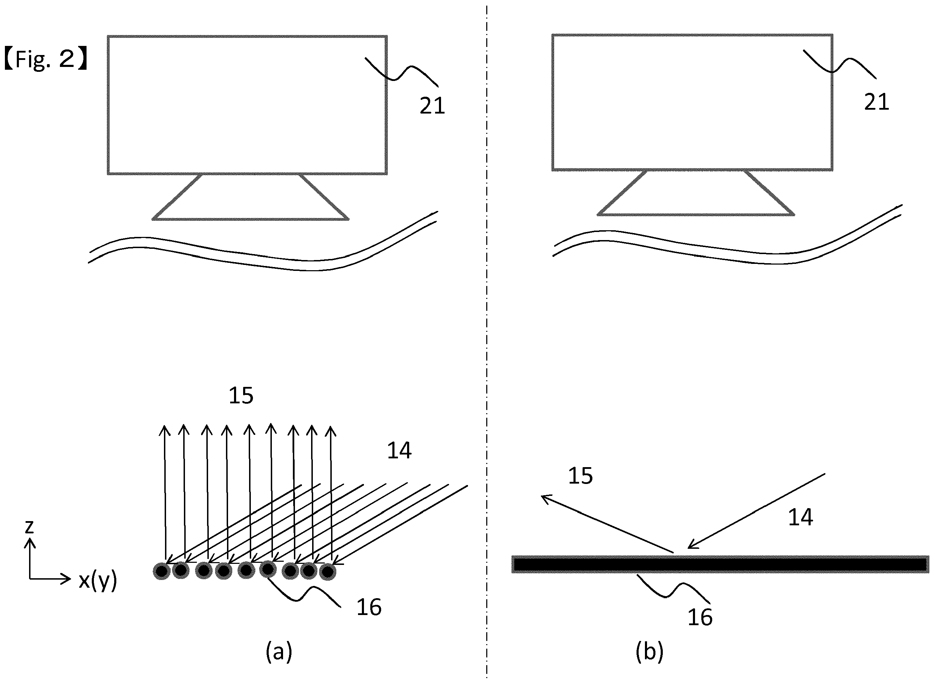

Next, the principle of measuring a width of a gap will be described. At least one of a surface layer base material and an exposed base material to be measured according to the present invention is an unidirectional reinforced fiber substrate, and an orientation form of a fiber included in the surface layer base material is different from an orientation form of a fiber included in the exposed base material. When light is irradiated from a direction vertical to an orientation direction of the fiber of the unidirectional reinforced fiber substrate as viewed from a z-axis side (where a surface of the surface layer base material corresponds to an xy-axis plane and a vertical direction corresponds to a z-axis direction), as illustrated in Fig. 2(a), a part of irradiation light 14 is always reflected by a reinforced fiber 16 and is directed toward a sensor 21 as reflected light 15. On the other hand, when light is irradiated from a direction parallel to the orientation direction of the fiber as viewed from the z-axis side, as illustrated in Fig. 2(b), the most part of the irradiation light 14 is not reflected in the direction of the sensor 21. The unidirectional reinforced fiber substrate is used for any one of the reinforced fiber substrates and light is irradiated from the direction vertical to the orientation direction of the fiber, thereby allowing the orientation form of other fibers and reflected light having an intensity higher than the irradiation of light from another direction to enter into the sensor. Although not illustrated, when the fiber of the fiber reinforced substrate other than the unidirectional reinforced fiber substrate is a woven cloth, a knit, or a random mat, light from the fiber can be slightly reflected, but the intensity of reflected light from a continuous fiber to be observed is higher than that of the reflected light from the fiber.

Then, the width of any one of a portion where the intensity of reflected light is high and a portion where the intensity of reflected light is low is observed.

Although not illustrated, in the case where the surface layer base material is a unidirectional reinforced fiber substrate, when light is applied from the direction vertical to the orientation direction of the continuous fiber, a linear portion where the intensity of reflected light is low can be observed between two portions where the intensity of reflected light is high due to the effect of reflection from the continuous fiber. The interval between the portions where the intensity of reflected light is high corresponds to the width of the gap.

In the case where the exposed base material is a unidirectional reinforced fiber substrate, when light is applied from the direction vertical to the orientation direction of the continuous fiber included in the base material, a linear portion where the intensity of reflected light is high can be observed. The width of this linear portion corresponds to the width of the gap. In this case, light is not applied on a part of the exposed portion due to the thickness of the surface layer base material, there may be an error in the width of the gap to be measured. If the error cannot be ignored, the following countermeasures can be taken.

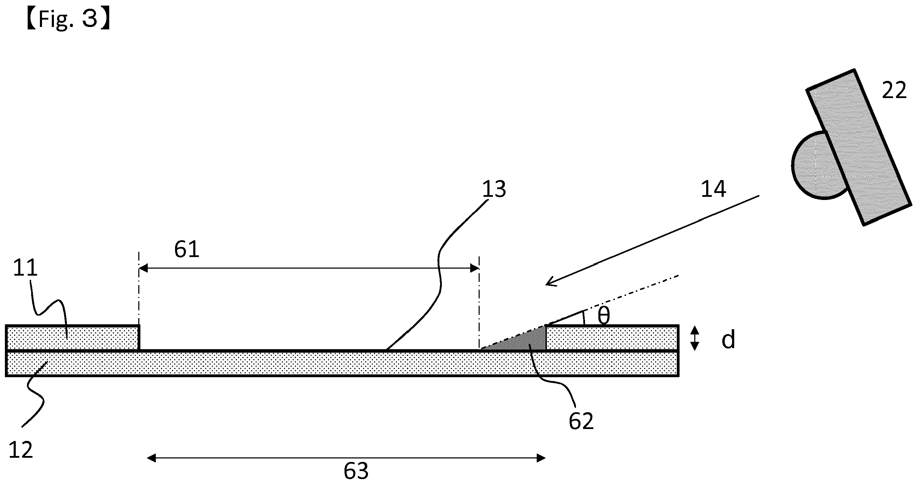

Please refer to Fig. 3. The irradiation light 14 from an irradiation source 22 is applied on the surface of the surface layer base material at an angle θ. (The surface of the surface layer base material corresponds to the xy-axis plane, and the angle θ is an angle in the z-axis direction.) Since the gap has a depth, a shadow portion 62 is generated in the exposed portion 13. The width measured by the sensor 21 is a width 61 of the reflection portion. An actual width 63 of the gap can be calculated by the following expression.

```
[gap width 63] = [sensor-measured width] + gap depth d/tan

θ.
```

The angle vertical to the orientation direction of the continuous fiber need not necessarily be 90°, but instead may be deviated from the angle as long as the advantageous effects of the invention can be obtained. For example, the angle is in a range from minus 15° to plus 15°.

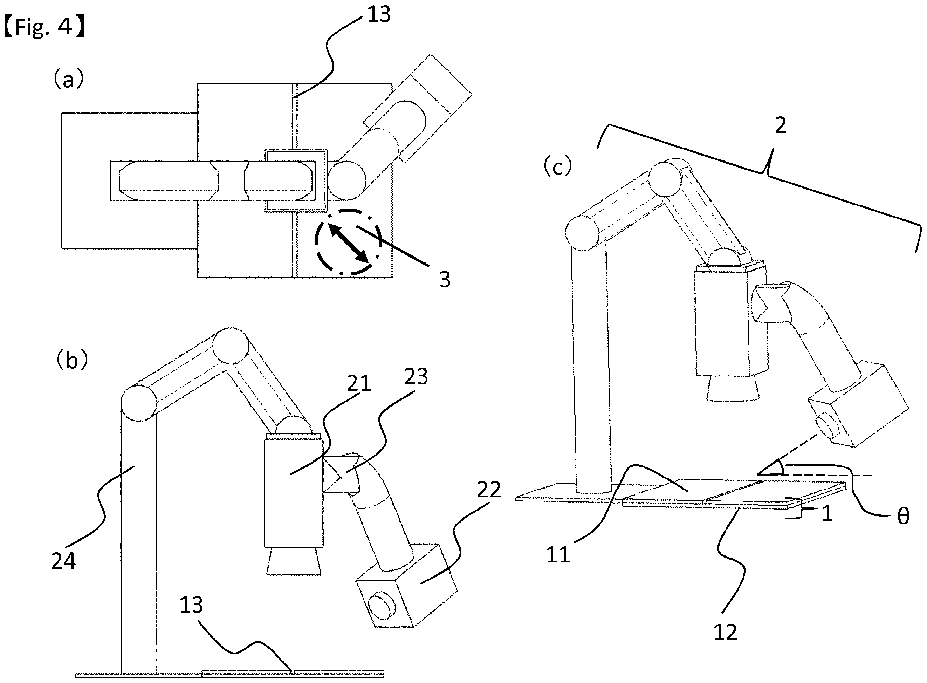

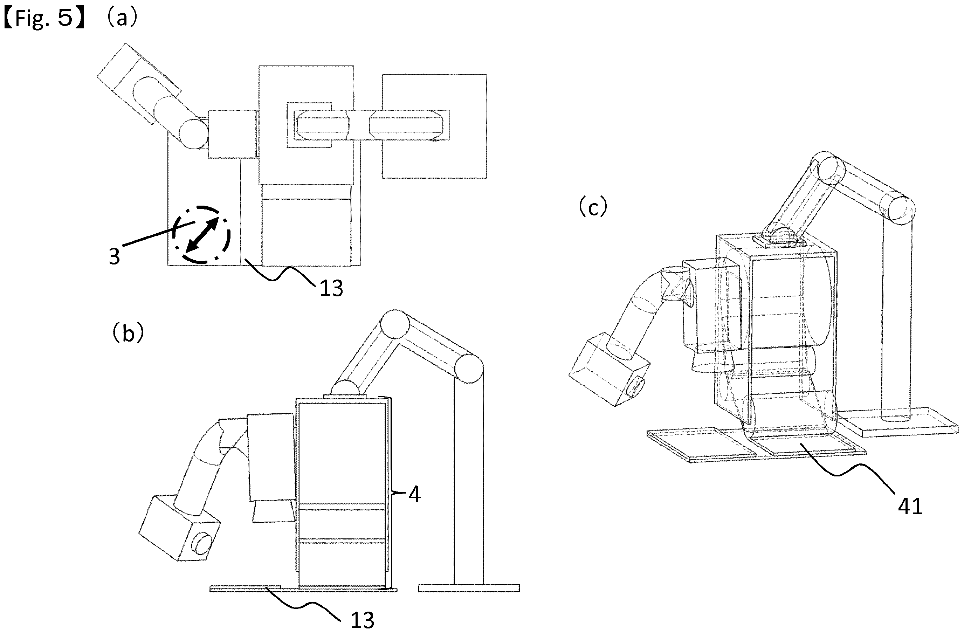

Next, a gap measuring device will be described with reference to Figs. 4 and 5. A double-headed arrow 3 illustrated in Fig. 4(a) and Fig. 5(b) indicates an orientation direction 3 of the fiber of the unidirectional orientation reinforced fiber substrate.

A gap measuring device 2 includes at least the sensor 21 and the irradiation source 22. As a preferred embodiment, the gap measuring device includes a rotation mechanism 23 and a holding mechanism 24. Further, as illustrated in Fig. 5, the gap measuring device may be combined with a reinforced fiber substrate automatic arrangement device 4.

The mechanism and form of the sensor 21 are not limited as long as the intensity of reflected light from the surface layer base material and the exposed portion of the exposed base material can be measured. For example, an area camera or a line camera can be employed to obtain an image. The obtained image is binarized and an operation for recognizing a boundary is performed, thereby making it possible to calculate the width of the exposed portion 13.

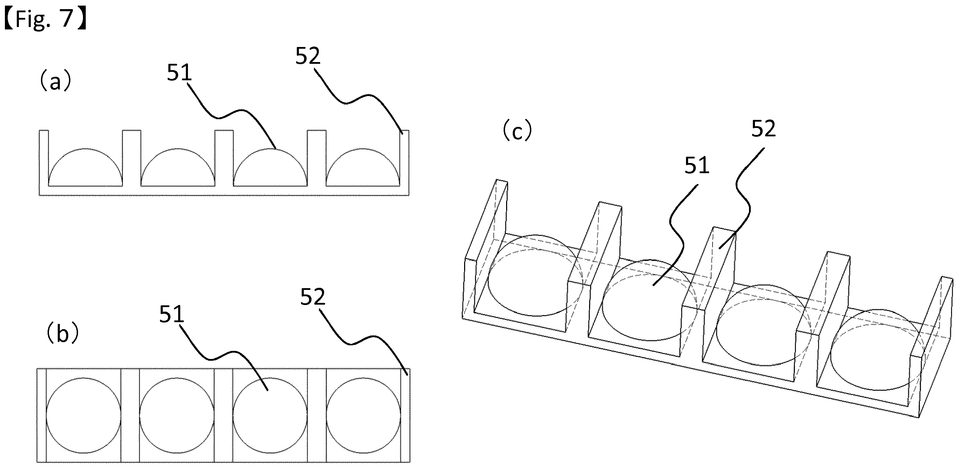

The mechanism and form of the irradiation source 22 are not particularly limited, and the irradiation source preferably includes at least one of a parallel light irradiation mechanism and a lateral light diffusion preventing mechanism. The laser irradiation device generally includes the mechanism described above. Further, in order to prevent diffusion of light in the lateral direction, as illustrated in Fig. 7, it is a preferable form to include a dispersion preventing mechanism 52, such as a light control film, to block diffused light from the light source 51.

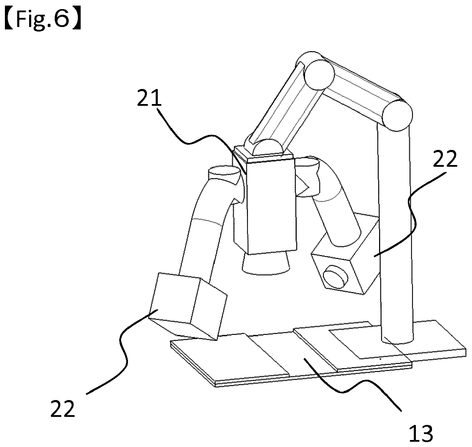

Further, as illustrated in Fig. 6, two irradiation sources 22 may be used and the irradiation sources may be present on opposite sides at an angle of 180° with respect to a central axis of light entering the sensor 21. Specifically, the two sensors 21 may be axially symmetric to the central axis of the entering light. Thus, no shadow is formed in the exposed portion.

As illustrated in Fig. 4(a), the irradiation source 22 can be arranged in the direction vertical to the orientation direction 3 of the continuous fiber in one of the surface layer base material 11 and the exposed portion 13 on which light is to be reflected. Further, as illustrated in Fig. 2(b), the irradiation source 22 can be arranged so that light can be applied from an obliquely upward direction of the reinforced fiber laminate 1. Specifically, the irradiation source 22 is disposed such that the angle θ (which is an angle in the z-axis coordinate direction with respect to the xy plane) of irradiation light with respect to the surface of the surface layer base material (on the xy plane) becomes an acute angle, and emits irradiation light. (This angle is 90° in the normal direction to the surface of the surface layer base material 11 according to the present invention.) The angle θ formed between the irradiation light and the surface of the surface layer base material on the reinforced fiber laminate 1 is preferably in a range from 5 to 60°, and more preferably, in a range from 10 to 30°. According to this angle, the contrast of reflected light from the fiber is increased, and thus the accuracy of measuring the width can be increased.

The rotation mechanism 23 causes the irradiation source 22 to rotate to move its position so as to adjust the angle of irradiation light in the horizontal direction. The mechanism and form thereof are not limited as long as the irradiation direction of the irradiation source 22 can be appropriately held. For example, the irradiation source 22 can be easily moved in the direction vertical to the orientation direction 3 of the continuous fiber on which the irradiation light is to be reflected.

The mechanism and form of the holding mechanism 24 are not limited as long as the sensor 21 and the irradiation source 22 can be appropriately held. For example, the sensor can be automatically moved along with the exposed portion 13.

The mechanism and form of the reinforced fiber substrate automatic arrangement device 4 are not limited as long as reinforced fiber substrates can be automatically arranged. An appropriate fiber heating device, fiber cutting device, functional particle imparting device, or the like may also be included. For example, the result of measuring the width of the gap can also be reflected in the control for arranging a new reinforced fiber substrate.

Subsequently, an example of a method for measuring a gap present in a laminated plate formed of a reinforced fiber according to the present invention will be described.

The irradiation source 22 is disposed on the reinforced fiber laminate to be measured according to the present invention in the direction vertical to the orientation direction (on the xy plane) of the continuous fiber in one of the surface layer base material and the exposed base material on which light is to be reflected, and at a height where the angle θ (angle in the z-axis coordinate direction with respect to the xy plane) of irradiation light with respect to the surface of the surface layer base material (on the xy plane) becomes an acute angle, and irradiates the reinforced fiber laminate with irradiation light. Further, the sensor 21 receives reflected light from the irradiation light, and the width of the gap of the exposed portion 13 is calculated from the intensity and width of the reflected light. In this case, the width of the reflected light is not limited to reflected light with a high intensity, and the width of reflected light with a low intensity may be used for the other portion.

First, the reinforced fiber laminate 1 is prepared within a measurement range of the gap measuring device 2. As illustrated in Fig. 4(a), the exposed portion 13 is preferably arranged immediately below the sensor 21.

Next, the height of the sensor 21 is adjusted so as to be focused in the continuous fiber on which light is to be reflected. As illustrated in Fig. 4(b), the height can be adjusted by adjusting the holding mechanism 24.

Subsequently, as illustrated in Fig. 4(a), the rotation mechanism 23 is adjusted so that the irradiation light from the irradiation source 22 is vertical to the orientation direction 3 of the continuous fiber on which light is to be reflected. At this time, the angle θ formed between the irradiation light and the surface of the surface layer base material 11 is preferably in a range from 5° to 60°. More preferably, the angle θ is in a range from 10 to 30°. According to this angle, the contrast of reflected light from the fiber is increased, and thus the accuracy of measuring the width can be further increased.

When a part of the continuous fiber is exposed from the reinforced fiber substrate, the area of a partial section to be subjected to irradiation and hidden behind the shadow of the continuous fiber increases. Accordingly, the angle θ is desirably determined in accordance with the smoothness of the fiber reinforced substrate on which light is to be strongly reflected.

While the gap measuring device 2 is in this state, irradiation light is irradiated and the sensor 21 measures the reflected light from the reinforced fiber laminate 1 with respect to the irradiation light. At this time, since the reinforced fiber present in the vertical direction strongly reflects the irradiation light, the sensor 21 can obtain an image with a high contrast, which makes it possible to easily recognize the width of the gap.

In this case, it is desirable to install the entire gap measuring device 2 of the reinforced fiber laminate 1 in a dark room so as to introduce only reflected light derived from the irradiation source 22 into the gap measuring device 2, use irradiation light having a wavelength different from that of normal illumination light, and use a filter for blocking a wavelength other than that of the irradiation light.

Further, as illustrated in Fig. 5, it is possible to control the arrangement of a reinforced fiber substrate 41 based on a gap measurement data in association with the reinforced fiber substrate automatic arrangement device.

As described above, according to the method and device for measuring a gap present in a laminated plate including a reinforced fiber according to the present invention, it is possible to provide a fiber arrangement measurement technique applicable to a production process, and a device for the fiber arrangement measurement technique, by using a simple technique.

The measured reinforced fiber laminate is formed into a molded body through a molding process, such as autoclave, and a trim process and the like. Examples of applications of the molded product include an aircraft, a spacecraft, and an automobile.

INDUSTRIAL APPLICABILITY

A method for measuring a width of a gap present in a reinforced fiber laminate according to the present invention can be applied to an AFP (Automatic Fiber Placement) technique used for aircraft and automobile industries.

DESCRIPTION OF REFERENCE SIGNS

1: Reinforced fiber laminate
11: Surface layer base material
12: Exposed base material
13: Exposed portion
2: Gap measuring device
21: Sensor
22: Irradiation source
23: Rotation mechanism

24: Holding mechanism
3: Orientation direction of continuous fiber
4: Reinforced fiber substrate automatic placement device
41: Reinforced fiber substrate
51: Light source
52: Dispersion preventing mechanism
61: Width of reflection portion
62: Shadow portion
63: Gap width

## Claims

1. A method for measuring a width of a gap present in a surface layer of a reinforced fiber laminate, wherein
the reinforced fiber laminate has a structure in which a plurality of reinforced fiber substrates is laminated,
a fiber reinforced substrate of the surface layer forms the gap due to presence of an elongated groove-like notch in at least a part of the fiber reinforced substrate of the surface layer, and a part of a fiber reinforced substrate different from the reinforced fiber substrate of the surface layer is exposed,
at least one of the fiber reinforced substrate of the surface layer and the fiber reinforced substrate having an exposed part is a unidirectional reinforced fiber substrate,
an orientation form of a fiber included in the fiber reinforced substrate of the surface layer is different from an orientation form of a fiber included in the fiber reinforced substrate that is present in the reinforced fiber laminate and has an exposed part, and
an irradiation source is disposed in a direction vertical to an orientation direction of a continuous fiber present in the unidirectional reinforced fiber substrate among the reinforced substrates and at an acute angle with respect to a surface of the fiber reinforced substrate of the surface layer, and irradiates the reinforced fiber laminate with light, reflected light from the irradiation light being received by a sensor, the width of the gap being calculated from an intensity and width of the reflected light.

2. The method for measuring the width of the gap present in the surface layer of the reinforced fiber laminate according to claim 1, wherein the fiber reinforced substrate of the unidirectional reinforced fiber substrate is one of a prepreg and a non-crimp fabric.

3. The method for measuring the width of the gap present in the surface layer of the reinforced fiber laminate according to claim 1 or 2, wherein an irradiation angle of the irradiation light is 5 to 60° with respect to a surface of the surface layer base material.

4. The method for measuring the width of the gap present in the surface layer of the reinforced fiber laminate according to any one of claims 1 to 3, wherein two irradiation sources are present and the irradiation sources are present on opposite sides at an angle of 180° with respect to a central axis of light entering the sensor.

5. The method for measuring the width of the gap present in the surface layer of the reinforced fiber laminate according to any one of claims 1 to 4, wherein the irradiation source includes one of a parallel light irradiation mechanism and a lateral light diffusion preventing mechanism.

6. The method for measuring the width of the gap present in the surface layer of the reinforced fiber laminate according to any one of claims 1 to 5, wherein a result of measuring the width of the gap is reflected in a placement device for arranging the reinforced fiber substrate to control an arrangement of the reinforced fiber substrate.

7. A device for measuring a width of a gap present in a surface layer of a reinforced fiber laminate, wherein
the reinforced fiber laminate has a structure in which a plurality of reinforced fiber substrates is stacked,
a fiber reinforced substrate of the surface layer forms the gap due to presence of an elongated groove-like notch present in at least a part of the fiber reinforced substrate of the surface layer, and a part of a fiber reinforced substrate different from the reinforced fiber substrate of the surface layer is exposed,
at least one of the fiber reinforced substrate of the surface layer and the fiber reinforced substrate having an exposed part is a unidirectional reinforced fiber substrate, an orientation form of a fiber included in the fiber reinforced substrate of the surface layer is different from an orientation form of a fiber included in the fiber reinforced substrate that is present in the reinforced fiber laminate and has an exposed part, and

the device comprises at least an irradiation source that irradiates the reinforced fiber laminate with irradiation light in a direction vertical to an orientation direction of a continuous fiber present in the unidirectional reinforced fiber substrate of the fiber reinforced substrate and at an acute angle with respect to a surface of the fiber reinforced substrate of the surface layer, and a sensor that receives reflected light from the irradiation light.

8. The device for measuring the width of the gap present in the surface layer of the reinforced fiber laminate according to claim 7, further comprising a calculating means for calculating the width of the gap from an intensity distribution of the reflected light output from the sensor.

9. The device for measuring the width of the gap present in the surface layer of the reinforced fiber laminate according to claim 7 or 8, wherein two irradiation sources are used and the irradiation sources are present on opposite sides at an angle of 180° with respect to a central axis of light entering the sensor.

10. The device for measuring the width of the gap present in the surface layer of the reinforced fiber laminate according to any one of claims 7 to 9, wherein the irradiation source includes at least one of a parallel light irradiation mechanism and a lateral light diffusion preventing mechanism.

11. The device for measuring the width of the gap present in the surface layer of the reinforced fiber laminate according to any one of claims 7 to 10, wherein a result of measuring the gap is reflected in a placement device for placing the reinforced fiber substrate to control an arrangement of the reinforced fiber substrate.

12. A molded body obtained by a method for measuring a width of a gap according to any one of claims 1 to 6, wherein the molded body is obtained by molding the reinforced fiber laminate after the width of the gap present in the reinforced fiber laminate is measured.

【Fig. 1】

【Fig. 2】

【Fig. 3】

EP 3 534 107 A1

【Fig. 4】

(a)

13

3

(b)

21    23

24

22

13

(c)

2

11

1

θ

12

EP 3 534 107 A1

【Fig. 5】 (a)

3

13

(c)

41

(b)

4

13

EP 3 534 107 A1

【Fig.6】

EP 3 534 107 A1

【Fig. 7】

（a）

51

52

（c）

52

51

（b）

51

52

EP 3 534 107 A1

# EP 3 534 107 A1

## INTERNATIONAL SEARCH REPORT

International application No.

PCT/JP2017/038693

### A. CLASSIFICATION OF SUBJECT MATTER
Int. Cl. G01B11/14(2006.01)i

According to International Patent Classification (IPC) or to both national classification and IPC

### B. FIELDS SEARCHED

Minimum documentation searched (classification system followed by classification symbols)
Int. Cl. G01B11/00-11/30

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-152342 A (TORAY ENGINEERING CO., LTD.) 24 August 2015, paragraphs [0002]-[0005], [0010], [0017]-[0022], [0030]-[0036], fig. 2, fig. 4 (Family: none) | 1, 2, 4-10, 12 |
| Y | | 3, 11 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |
|---|---|

Form PCT/ISA/210 (second sheet) (January 2015)

17

**EP 3 534 107 A1**

## INTERNATIONAL SEARCH REPORT

International application No.

PCT/JP2017/038693

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2014-126378 A (TORAY ENGINEERING CO., LTD.)<br>07 July 2014, paragraphs [0008], [0020], [0029]-[0038],<br>fig. 2 & US 2015/0348255 A1, paragraphs [0010], [0031],<br>[0045]-[0056], fig. 2 & WO 2014/103625 A1 | 3<br>1, 2, 4-12 |
| Y<br>A | JP 2007-187545 A (TORAY INDUSTRIES, INC.) 26 July 2007,<br>paragraphs [0031], [0032] (Family: none) | 11<br>1-10, 12 |

Form PCT/ISA/210 (continuation of second sheet) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016075662 A
- JP 2008122178 A